# EUROPÄISCHE PATENTSCHRIFT

(11) **EP 2 564 278 B1**
(45) Veröffentlichungstag und Bekanntmachung des Hinweises auf die Patenterteilung: **10.06.2015**
(21) Anmeldenummer: 11716517.5
(22) Anmeldetag: 20.04.2011
(51) Int. Cl.: G05B 19/409

(54) **VERFAHREN ZUR DARSTELLUNG EINES PROGRAMMIERBAREN ABLAUFS FÜR EINE ODER MEHRERE MASCHINEN MIT EINEM ZYKLISCH WIEDERKEHRENDEN MASCHINENBETRIEBSABLAUF**
METHOD FOR DISPLAYING A PROGRAMMABLE SEQUENCE FOR ONE OR MORE MACHINES THAT FOLLOW A CYCLIC SEQUENCE OF OPERATIONS
PROCÉDÉ DE REPRÉSENTATION DE LA SÉQUENCE PROGRAMMABLE DES OPÉRATIONS POUR UNE OU PLUSIEURS MACHINES DONT LA SÉQUENCE DES OPÉRATIONS SE RÉPÈTE DE MANIÈRE CYCLIQUE

(30) Priorität: 28.04.2010 DE 102010018475
(43) Veröffentlichungstag der Anmeldung: 06.03.2013
(73) Patentinhaber: Netstal-Maschinen AG, 8752 Näfels (CH)
(72) Erfinder: MÜLLER, Daniel, 8722 Kaltbrunn (CH); KNOBEL, Erich, 8810 Horgen (CH)
(74) Vertreter: Wilhelm, Ludwig
(86) Internationale Anmeldenummer: PCT/EP2011/056332
(87) Internationale Veröffentlichungsnummer: WO 2011/134863

(56) Entgegenhaltungen:
- EP-A1- 0 573 912
- WO-A1-2006/089451
- AT-U1- 10 596
- DE-A1- 10 246 925

## Beschreibung

Die vorliegende Erfindung betrifft ein Verfahren zur Darstellung eines programmierbaren Ablaufs für eine oder mehrere Maschinen gemäß dem Oberbegriff des Anspruchs 1.

Bei modernen Werkzeugmaschinen, beispielsweise Spritzgießmaschinen, können Maschinenabläufe, beispielsweise der Produktionsablauf, oftmals grafisch auf einer Bildschirmeinrichtung dargestellt und modelliert werden. Mit Hilfe einer solchen grafischen Modellierung ist es insbesondere möglich, die Abhängigkeiten zwischen den einzelnen Kommandofunktionen zu visualisieren und dem Bediener der zyklische Ablauf insgesamt verständlich zu machen. Dabei werden die einzelnen Prozessschritte während des laufenden Maschinenbetriebs teilweise auch grafisch animiert, so dass man die gerade durchgeführten Programmschritte an der Bildschirmeinrichtung nach- und mitverfolgen kann.

Die Möglichkeiten einer solchen Modellierung helfen zum einen bei der Einrichtung und Umprogrammierung einer Werkzeugmaschine, beispielsweise einer Spritzgießmaschine. Ein fertig modellierter Ablauf zeigt aber andererseits auch die Reihenfolgevorschriften sehr gut. Jedoch sind die zeitlichen Korrelationen oft nicht aussagekräftig genug dargestellt. Dies ist problematisch, da dem zeitlichen Verhalten bei einem Maschinenablauf bezüglich der Optimierung eines Zyklus oftmals große Bedeutung zukommt. Fehlt eine solche Visualisierung der zeitlichen Korrelation von Kommandofunktionen, so muss der Maschinenbediener beim Betrachten des Ablaufs in Bezug auf die echten Maschinenbewegungen bzw. deren Dauer eine Art "geistige Übersetzungsarbeit" leisten. So ist eine "Übersetzungsarbeit" notwendig, wenn die Erkenntnisse aus einer zeitlichen Darstellung (z.B. Sequenzdiagramm) in Anpassungen am Ablauf umgesetzt werden müssen. Auch umgekehrt, also wenn für Anpassungen am Ablauf die Auswirkungen auf das zeitliche Verhalten abgeschätzt werden müssen, ist eine solche Transferarbeit zu leisten.

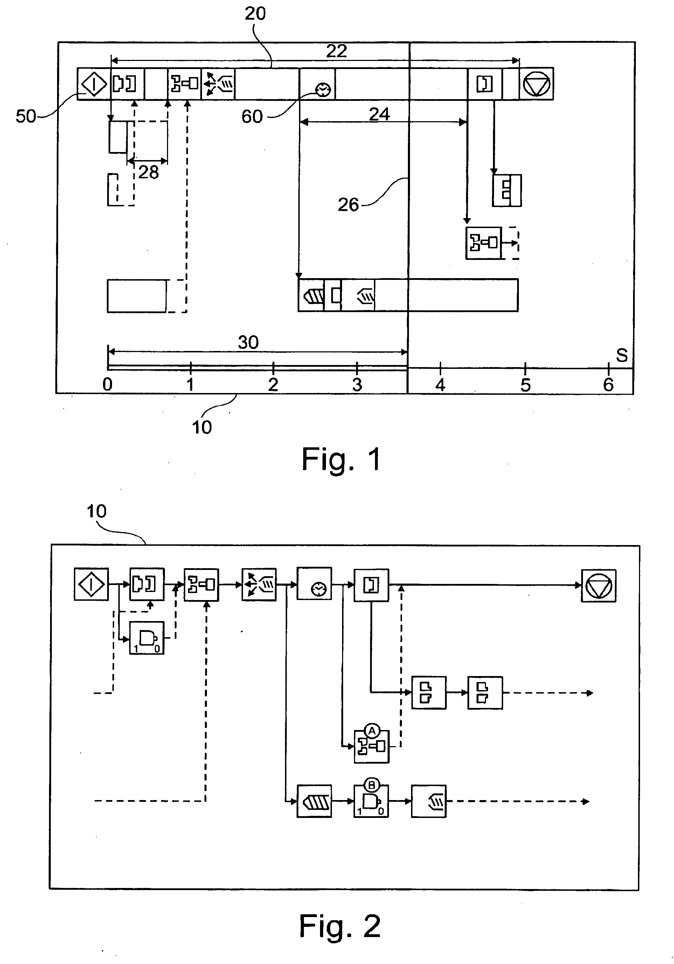

Hinsichtlich der allgemeinen Hintergrundtechnologien zum Stand der Technik wird auf die Dokumente DE 102 469 25 A1, EP 573 912 B1 sowie WO 2006/089451 hingewiesen. In allen vorgenannten Fällen ist es möglich, den Ablauf bei einer Spritzgießmaschine grafisch vorzugeben und in Abhängigkeit von den einzelnen Prozessschritten zu definieren. Geht es jedoch um das zeitliche Verhalten des realen Zyklus, so hat der Maschinenbediener immer die vorgenannte "Übersetzungsarbeit" zu leisten. Dies kann anhand der Figuren 2 - 4 erläutert werden.

In Fig. 2 ist eine Ablaufdarstellung auf einer Bildschirmeinrichtung 10 gezeigt, bei der mittels sogenannter "Icons" durchzuführende Kommandofunktionen in der richtigen Reihenfolge dargestellt und die Abläufe (auch Verzweigungen) mittels Pfeilen angegeben sind. Der Betrachter kann damit die Kommandofunktionen feststellen, die durchgeführt werden sollen oder worden sind. Zudem können in gewisser Weise noch parallele Abläufe erkannt werden. Ein genauer zeitlicher Zusammenhang ist jedoch nicht ersichtlich. Beispielsweise wird in der Ablaufdarstellung der Fig. 2 der Eindruck erweckt, dass die mit A und B bezeichneten Funktionen gleichzeitig und parallel ablaufen werden. Ein zeitlicher Bezug der Prozessschritte A und B ist jedoch nicht gegeben. Würde er so angenommen, würde er fälschlicherweise so interpretiert werden.

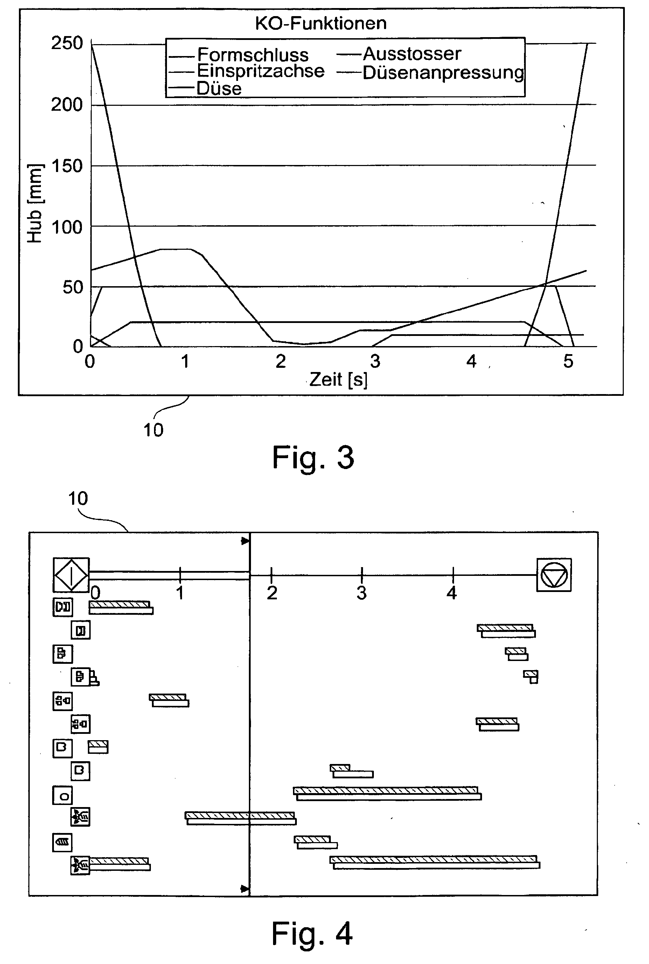

Stellt man den zyklischen Ablauf in Form einer sogenannten KO-Funktion (KO kommt von Kathodenstrahl-Oszilloskop) dar, so werden in Fig. 3 für die Maschinenkomponenten "Formschluss", "Einspritzachse", "Düse", "Ausstoßer" und "Düsenanpressung" die zeitlichen Verläufe der Achspositionen ausgegeben. Allerdings ist bei dieser Darstellung der strukturelle Aufbau des Ablaufprogrammes nicht erkennbar; auch ist der Bezug der Linien zum zugehörigen Prozessschritt nicht unmittelbar ersichtlich.

Aus der sogenannten Sequenzgrafik (auch Zykluszeitdiagramm genannt) in Fig. 4 ist zwar der zeitliche Ablauf der einzelnen Komponenten, jedoch wiederum nicht der strukturelle Aufbau des Ablaufs sowie die Abhängigkeiten zwischen den einzelnen Prozessschritten ersichtlich.

Das Dokument AT010596U1 offenbart ein Verfahren zur graphisch unterstützten Erstellung, Änderung, Überwachung und/oder Optimierung des Gesamtmaschinenablaufs einer programmgesteuerten Maschine oder Anlage wie beispielsweise einer Spritzgießmaschine. Die Zusammenstellung des gesamten Maschinenablaufes und alle weiteren wesentlichen Konfigurationsschritte erfolgen in einem einzigen zweidimensionalen Ablaufdiagramm, dessen Diagrammfläche durch eine gedachte oder visualisierte Maschinensystemachse in einer Maschinenkomponentendimension und eine gedachte oder visualisierte Ablaufzeitachse in einer Zeitdimension aufgespannt wird. In diese Diagrammfläche werden alle Teilmaschinenabläufe, welche am Gesamtmaschinenablauf beteiligt sind, mit Hilfe eines Grafikeditors durch vollautomatisierte oder benutzerinitiiert teilautomatisierte Positionierung oder Repositionierung zugeordneter Ablaufsymbole eingetragen, und zwar in der Maschinenkomponentendimension entsprechend ihrer Zugehörigkeit zu einer Maschineneinheit und in der Zeitdimension entsprechend ihrer technisch erforderlichen und durch die Bedienperson gewünschten Synchronisierung mit anderen Teilmaschinenabläufen.

Aufgabe der vorliegenden Erfindung ist es, ein Verfahren anzugeben, welches neben der grafischen Modellierung eines Maschinenbetriebsablaufes durch Angabe der auszuführenden Kommandofunktionen mit deren Abhängigkeiten zusätzlich das zeitliche Verhalten des Maschinenbetriebsablaufs in korrekter Weise darstellt.

Diese Aufgabe wird durch die im Anspruch 1 genannten Merkmale gelöst.

Demgemäß ist ein Gedanke der vorliegenden Erfindung darin zu sehen, aus einem vollständig programmierten Ablauf oder auch nur einem Teilablauf für eine Maschine (beispielsweise Spritzgießmaschine) unter Berücksichtigung der vorgegebenen Produktionsparameter und von Ist-Werten für die eingesetzten Maschinenkomponenten eine zeitliche Korrelation der einzelnen Prozessschritte zu erzeugen und auf dem Bildschirm darzustellen, wobei zu dem Diagramm am Bildschirm eine Fortschrittslinie angezeigt wird, welche die Position angibt, an der sich die Maschine bei der Abarbeitung des Ablaufprogramms aktuell befindet. So kann der Bediener unmittelbar mit Blick auf den Bildschirm erkennen, in welcher Arbeitsposition sich die Maschine gerade befindet und welche Zeit seit Zyklusbeginn bereits abgelaufen ist. Weiter kann er erkennen, welche weiteren Kommandos und Funktionen beim verbleibenden Zyklus noch durchgeführt werden müssen. Diese Art von Ansicht wird Fortschrittsmodus genannt. Dadurch erübrigen sich insbesondere die vorgenannt beschriebenen "Übersetzungs-" und Transferarbeiten, die ansonsten vom Bediener geleistet werden müssen. Dabei orientiert sich die zeitliche Darstellung stark an der Darstellung des grafisch modellierten Zyklus.

Bei dieser Vorgehensweise ist es notwendig, einen Ablauf oder Teilablauf vollständig zu kennen, da nur bei Kenntnis der entsprechenden Gesamtheit der Kommandofunktionen und deren zeitlicher Erstreckung auch die zeitliche Auswirkung aufeinander und für den gesamten Maschinenbetriebsablauf insgesamt ermittelbar ist. Überdies sollten die notwendigen Produktionsparameter, insbesondere diejenigen, welche einen zeitlichen Einfluss auf den Maschinenbetriebsablauf haben, vom Bediener vorgegeben werden; beispielsweise kann es wichtig sein zu wissen, mit welcher Temperatur ein Verfahrensschritt durchgeführt werden soll. So ergibt es natürlich einen zeitlichen Unterschied, ob eine Achse (z.B. die Spritzachse) mit einer Geschwindigkeit von 50 mm/s, 200 mm/s oder 450 mm/s gefahren werden muss. Überdies kann ein Dosierungsvorgang in einem kürzeren oder einem längeren Zeitintervall durchgeführt werden. Dies hängt wiederum von der Umdrehungsgeschwindigkeit der Aufschmelzschnecke, dem Material, etc ab.

Auch beim Bewegen von beweglichen Aufspannplatten, dem Betrieb des Auswerfers oder anderen Betätigungen ist oftmals deren Betriebsweise in weiten Bereichen wählbar. Zur Bestimmung der relevanten Ist-Werte, ist der programmierte Maschinenablauf (mindestens) einmal im Zyklus zu durchlaufen. Vorzugeben sind insbesondere solche Ist-Werte von Maschinenkomponenten, die für die Bestimmung zeitlicher Effekte notwendig sind; so müssen bestimmte Ist-Werte von Maschinenkomponenten manchmal zwingend eingehalten werden, manchmal sind zumindest Zeit bestimmend.

Für den Bediener ist es somit nicht mehr notwendig, eine "Übersetzungsarbeit" im Hinblick auf eine echte Maschinenbewegung zu leisten, da die zeitliche Korrelation bereits an der Bildschirmeinrichtung dargestellt und damit explizit angegeben wird.

Dabei werden die Kommandos vorzugsweise entsprechend der zeitlichen Erstreckung längenmäßig skaliert und in einer zeitlich korrekten Länge dargestellt. Dies kann beispielsweise derart geschehen, dass zu Beginn eines insbesondere balkenmäßig dargestellten Kommandos ein Kommando-Icon angegeben ist, welches die Funktion angibt und anschließend bis zum Erreichen des zeitlich korrekten Endes fortgeführt wird und dann endet. Damit kann man ohne weiteres aus dem Diagramm und der Abbildung auf dem Bildschirm die zeitliche Erstreckung und insbesondere die zeitliche Korrelation der Kommandofunktionen untereinander entnehmen, so dass klar ersichtlich ist, welche Prozessschritte parallel und welche Prozessschritte sequenziell ablaufen.

Auch sollten in einer vorzugsweisen Ausführungsform Pufferzeiten, die nicht unmittelbar in die Zykluszeit eingehen, somit nicht zykluszeitrelevant sind und hinsichtlich der Zykluszeit als ungenutzte Zeit verbleiben, gesondert dargestellt werden können.

Für den Bediener kann es überdies nützlich sein, wenn die Zykluszeit bestimmende Kommandoabfolge insgesamt als kritischer Pfad dargestellt wird. Damit sieht er, welche Funktionen und Kommandos für die aus dem Ablauf resultierende Zykluszeit kritisch sind und welchen Effekt es hätte, wenn man bestimmte Kommandofunktionen ändern oder alternativ realisieren würde.

Eine eigene Ansichtsmöglichkeit besteht darin, einen sogenannten Rollmodus zu realisieren, bei dem die aktuelle Ablaufposition örtlich fest am Bildschirm dargestellt ist. Unter der festen Markierung rolliert gleichsam das Ablaufprogramm entsprechend der Abarbeitung beispielsweise in Form eines Bandes, welches von einer Seite bis zur anderen Seite über den Bildschirm läuft. Diese Art der Darstellung ist bei einem kontinuierlichen Betrieb der Maschine hilfreich. Natürlich kann es auch vorgesehen werden zwischen den verschiedenen Ansichtsarten umzuschalten.

Für einen Benutzer kann überdies die Zeit zwischen zwei verschiedenen Kommandofunktionen interessant sein. Zu diesem Zweck ist es möglich, eine Funktion vorzusehen, bei der er auf dem Bildschirm zwei Ablaufpunkte markiert, wobei die zwischen diesen Punkten ablaufende Zeit beim Betrieb der Maschine dann angezeigt wird. Dies ist möglich, da der Ablauf und insbesondere die Kommandos zeitmassstabsgetreu dargestellt werden. Letztere Aussage stellt auch einen Kerngedanken der Erfindung dar.

Weiter kann sich der Benutzer vorausgehende Zyklen oder auch Referenzzyklen anzeigen lassen. Dies kann natürlich in vergrößerter oder verkleinerter Form passieren (Skalierung - also Stauchung oder Dehnung der Längen und damit auch der Zeitachse).

Gemäß einer weiteren vorteilhaften Ausführungsform der Erfindung wird eine Sequenz eines Ablaufs oder ein gesamter Ablauf mit und ohne Referenzzyklen - beispielsweise für eine weitere Analyse - exportiert, für eine Programmierung einer Steuerung in diese importiert oder zu einer späteren, weiteren Verwendung abgespeichert.

Die vorliegende Erfindung wird nachfolgend mit Bezug auf die beigefügten Zeichnungen anhand einer konkreten Ausführungsform näher erläutert. Die Zeichnungen zeigen in
- Fig. 1: eine schematische Darstellung eines Bildschirms mit Ablaufdiagramm mit exakter zeitlicher Korrelation der programmierten Kommandofunktionen,
- Fig. 2: ein Ablaufdiagramm mit Abhängigkeiten der Kommandofunktionen ohne zeitliche Korrelation,
- Fig. 3: ein Ablaufdiagramm nach Art einer KO-Anzeige und
- Fig. 4: ein Diagramm nach Art einer Sequenzgrafik, aus der der zeitliche Ablauf ersichtlich ist, jedoch nicht der strukturelle Aufbau und die Abhängigkeiten zwischen den einzelnen Prozessschritten.

Das Ausführungsbeispiel der vorliegenden Erfindung ist allein mit Blick auf Fig. 1 zu erläutern. Dabei ist in Fig. 1 eine Bildschirmeinrichtung 10 dargestellt, auf dem der Betriebs- und Produktionsablauf bei der Spritzgießmaschine dargestellt ist.

Mit dem Icon 50 wird der Start eines Spritzgießzyklus angezeigt. Das Icon 52 zeigt das Ende eines Spritzgießzyklus an. Ist dieser Ablauf durchlaufen, fängt der Prozess wieder beim Beginn des Zyklus (Icon 50) an. Zwischen diesen beiden Markierungen (Icon 50 und 52) ist der gesamte Ablauf eines Zyklus in zeitlich richtiger Korrelationen der Kommandofunktionen untereinander modelliert. Dabei sind die einzelnen Prozessschritte in Form der Kommandofunktionen dargestellt. Jede Kommandofunktion weist einen Balken auf, an dessen Anfang sich ein Kommando-Icon befindet, welches die Funktion angibt, und welche mittels eines Balkens bis zum (zeitlichen) Ende des Prozessschrittes verlängert ist.

Somit kann man aus der oberen zusammenhängenden Zeilendarstellung erkennen, dass beim Betrieb der Spritzgießmaschine eine Spritzgießwerkzeug zunächst geschlossen wird (Icon mit Bezugszeichen 54). Anschließend wird die Plastifizier- und Einspritzeinheit an das Werkzeug herangefahren (Icon mit Bezugszeichen 56) und der Einspritz- und Nachdruckvorgang durchgeführt (Icon mit Bezugszeichen 58). Als nächstes wird ein Kühlvorgang durchgeführt (Icon mit Bezugszeichen 60), der sich bis zu einem Zeitpunkt erstreckt, an dem das Werkzeug geöffnet wird (Icon mit Bezugszeichen 62). Parallel (und in Fig. 1 darunter dargestellt) werden noch (nicht eigens mit Bezugszeichen bezeichnet) weitere Schritte wie der Schneckenrückzug, das Öffnen der Plastifizierdüse, die Dosierung einer Kunststoffschmelze, das Abheben der Plastifizier- und Einspritzeinrichtung vom Werkzeug und der Betrieb des Auswerfers durchgeführt. Diese Schritte werden mit einer entsprechenden Abhängigkeitsverzweigung parallel dargestellt. Dabei ist auf die richtige zeitliche Korrelation geachtet, die nunmehr in korrekter Weise dargestellt wird, was man über die Zeitachse (im Bild unten) erkennen kann.

Durch Einblenden einer Fortschrittslinie 26 kann man unmittelbar erkennen, in welchem Prozessschritt sich die Spritzgießmaschine augenblicklich befindet. Bei dem in Fig. 1 dargestellten Schritt findet gerade die Kühlzeit im Werkzeug nach dem Nachdruck statt und gleichzeitig dosiert die Plastifizier- und Einspritzeinheit (vgl. unterer Balken) gerade wieder Kunststoffschmelze auf. Je nach Ablauffortschritt wandert die Fortschrittslinie 26 entweder über die Bildschirmeinrichtung (Fortschrittsmodus) oder sie bleibt alternativ fest und die sonstige Darstellung bewegt sich unter der Fortschrittsmarkierung von rechts nach links (Rollmodus).

Aus der Figur 1 ist auch mit der Angabe 22 die zeitliche Erstreckung des gesamten Zyklus angegeben, wobei die Zykluszeit bestimmt wird durch den sogenannten (zeit-) kritischen Pfad 20, der die Zykluszeit bestimmende Kommandoabfolge enthält. Dieser kritische Pfad ermöglicht dem Bediener, diejenigen Kommandofunktionen zu erkennen, die Zykluszeit bestimmend sind. Durch eine Veränderung dieser Kommandofunktionen kann er die Zykluszeit verändern.

Weiter ist in der Abbildung mit Bezugszeichen 28 ein Zeitraum angegeben, der als Puffer dient. Im vorliegenden Fall besteht zwischen dem Ende der dargestellten Kommandofunktion und demjenigen Schritt, bei dem diese Funktion vor einer anderen Kommandofunktion beendet sein muss, beispielsweise Beginn des Heranfahrens der Plastifizier- und Einspritzeinrichtung an das Werkzeug (Bezugszeichen 56), eine freie Zeitphase 28, die die Zykluszeit nicht beeinflusst und somit einen Pufferzeitraum darstellt.

Aus der Abbildung in Fig. 1 kann man weiter die Zeit erkennen (vgl. Bezugszeichen 30), die zwischen dem Zyklusbeginn und der aktuellen Ablaufposition abgelaufen ist. Es ist mit der vorliegenden Erfindung auch möglich, die Zeit eines bestimmten Kommandos, beispielsweise des Kühlkommandos 60 mit der zeitlichen Erstreckung 24, abzulesen. Alternativ ist es möglich, durch zwei Markierungen in dem Diagramm einen Zeitraum zwischen zwei Punkten zu ermitteln.

Insgesamt kann daher der grafisch modellierte Ablauf zeitlich richtig skaliert dargestellt werden, wobei auch die Zykluszeit bestimmende Kommandoabfolge ersichtlich ist. Aufgrund der Fortschrittsanzeige ist die aktuelle Maschinenablaufposition zu erkennen. Natürlich ist es weiter möglich, die Aufzeichnung zu stoppen, die Darstellung zu vergrößern oder zu verkleinern (Zoom-Funktionen). Auch können andere Abläufe, wie den vorausgehenden Zyklus, einen Referenzzyklus etc. dargestellt werden. Überdies ist es möglich, die Konfiguration der Grafik zu verändern, beispielsweise auszuwählen, ob nur der aktuelle Zyklus oder der aktuelle wie auch der vorausgegangene Zyklus oder parallel ein Referenzzyklus dargestellt werden sollen.

Ferner ist es möglich, die Abfolgen der Sequenzen - evtl. inklusive vorgegebenen Ist- und Parameterwerten und eines Referenzzyklus - zu exportieren, zu importieren oder abzuspeichern, um so eine Analyse, eine Speicherung in einer Steuereinheit oder eine Aufbewahrung für einen späteren Zweck zu ermöglichen.

Die beschriebene Erfindung ermöglicht es dem Bediener ohne Weiteres, die Maschine einfach einzurichten oder den Maschinenablauf zu verfolgen, wobei er die zeitliche Korrelation zwischen den vorgegebenen Kommandofunktionen unmittelbar erkennen kann. Damit sieht er, welche Prozessschritte versetzt oder auch gleichzeitig ablaufen. Eine Übersetzungsarbeit von einer modellierten Ablaufsteuerung zu einer Echtmaschinenbewegung oder eines Sequenzdiagramms ist damit nicht mehr notwendig.

### Bezugszeichenliste

- 10: Bildschirm
- 20: Kritischer Pfad (Zykluszeit bestimmende Kommandoabfolge)
- 22: Zykluslänge
- 24: Kommandolänge
- 26: Fortschrittsanzeiger
- 28: Pufferzeit
- 30: Abgelaufene Zykluszeit

## Patentansprüche

1. Verfahren zur Darstellung des programmierbaren Ablaufs für eine oder mehrere Maschinen mit einem zyklischen Maschinenbetriebsablauf auf einem Bildschirm (10), bei dem
- ein Ablauf unter Verwendung von Kommandofunktionen (54, 56, 58, 60, 62) programmiert oder verändert wird,
- notwendige Produktionsparameter vorgegeben werden,
- falls erforderlich Istwerte für die Maschinenkomponenten miteinbezogen werden und
- der Ablauf der einzelnen Prozessschritte und deren Abhängigkeiten auf dem Bildschirm (10) dargestellt werden,
wobei aus einem vollständig programmierten Ablauf oder Teilablauf unter Berücksichtigung der vorgegebenen Produktionsparameter und der Istwerte für die Maschinenkomponenten eine zeitliche Korrelation der einzelnen Prozessschritte erzeugt und auf dem Bildschirm (10) dargestellt wird,
und wobei die Kommandos (54, 56, 58, 60, 62) zeitlich skaliert und in der zeitlich korrekten Länge dargestellt werden,
**dadurch gekennzeichnet,**
**dass** eine Forschrittslinie (26) angezeigt wird, welche die Position angibt, an der sich die Maschine bei der Abarbeitung des Ablaufprogramms aktuell befindet.

2. Verfahren nach Anspruch 1,
**dadurch gekennzeichnet,**
**dass** die Kommandos (54, 56, 58, 60, 62) durch eine Repräsentation des Kommandos sowie eine Verlängerung bis zum Erreichen des zeitlich korrekten Endes dargestellt werden.

3. Verfahren nach einem der vorhergehenden Ansprüche,
**dadurch gekennzeichnet,**
**dass** eine nicht in die Zykluszeit eingehende Pufferzeit (28) gesondert dargestellt wird.

4. Verfahren nach einem der vorhergehenden Ansprüche,
**dadurch gekennzeichnet,**
**dass** eine Zykluszeit bestimmende Kommandoabfolge als kritischer Pfad (20) dargestellt wird.

5. Verfahren nach einem der vorhergehenden Ansprüche,
**dadurch gekennzeichnet,**
**dass** die abgelaufene Zeit (30) zwischen einem Zyklusbeginn und der aktuellen Position im Ablaufprogramm dargestellt wird.

6. Verfahren nach einem der vorhergehenden Ansprüche,
**dadurch gekennzeichnet,**
**dass** in einem Rollmodus eine Ansichtsweise auf dem Bildschirm dargestellt wird, bei der die aktuelle Ablaufposition (26) örtlich fest am Bildschirm dargestellt wird und der programmierte Ablauf entsprechend der Abarbeitung des Ablaufprogrammes bandförmig hinterlegt auf dem Bildschirm (10) abläuft.

7. Verfahren nach einem der vorhergehenden Ansprüche,
**dadurch gekennzeichnet,**
**dass** in einem Fortschrittsmodus eine Ansichtsweise auf dem Bildschirm dargestellt wird, bei der angezeigt wird, welche weiteren Kommandos und Funktionen beim verbleibenden Zyklus noch durchzuführen sind.

8. Verfahren nach einem der vorhergehenden Ansprüche,
**dadurch gekennzeichnet,**
**dass** aus zwei auf dem Bildschirm (10) markierten Punkten im Ablauf die ablaufmäßig dazwischen liegende Zeit ermittelt wird.

9. Verfahren nach einem der vorhergehenden Ansprüche,
**dadurch gekennzeichnet,**
**dass** ein dem aktuellen Zyklus vorausgegangener Zyklusablauf angezeigt wird.

10. Verfahren nach einem der vorhergehenden Ansprüche,
**dadurch gekennzeichnet,**
**dass** ein Referenzzyklusablauf angezeigt wird.

11. Verfahren nach einem der vorhergehenden Ansprüche,
**dadurch gekennzeichnet,**
**dass** die Zeitachse der Darstellung skaliert wird.

12. Verfahren nach einem der vorhergehenden Ansprüche,
**dadurch gekennzeichnet,**
**dass** ein Ablauf oder Sequenzen eines Ablaufes ggf. mit Ist- und/oder Referenzwerten exportiert, importiert oder abgespeichert werden.

13. Verfahren nach einem der vorhergehenden Ansprüche,
**dadurch gekennzeichnet,**
**dass** die fortlaufende Anzeige (26) angehalten wird.

## Claims

1. A method for the representation of the programmable sequence for one or more machines that follow a cyclic machine operating sequence on a screen (10), in which
- a sequence is programmed or altered using command functions (54, 56, 58, 60, 62),
- necessary production parameters are predetermined,
- if necessary, actual values are incorporated for the machine components and
- the sequence of the individual process steps and their dependencies are represented on the screen (10),
wherein a chronological correlation of the individual process steps is produced and represented on the screen (10) from a fully programmed sequence or partial sequence, taking into consideration the predetermined production parameters and the actual values for the machine components,
and wherein the commands (54, 56, 58, 60, 62) are scaled chronologically and are represented in the chronologically correct length,
**characterized in that**
a progress line (26) is displayed, which indicates the position at which the machine is currently situated during the execution of the sequence program.

2. The method according to Claim 1, **characterized in that** the commands (54, 56, 58, 60, 62) are displayed by a representation of the commands and an extension up to the reaching of the chronologically correct end.

3. The method according to one of the preceding claims, **characterized in that** a buffer time (28) which is not entering into the cycle time is represented separately.

4. The method according to one of the preceding claims, **characterized in that** a command sequence determining cycle time is represented as a critical path (20).

5. The method according to one of the preceding claims, **characterized in that** the elapsed time (30) is represented between a cycle start and the current position in the sequence program.

6. The method according to one of the preceding claims, **characterized in that** in a rolling mode, a manner of viewing on the screen is represented, in which the current sequence position (26) is represented in a locally fixed manner on the screen and the programmed sequence, deposited in band form in accordance with the execution of the sequence program, runs on the screen (10).

7. The method according to one of the preceding claims, **characterized in that** in a progress mode, a manner of viewing on the screen is represented, in which there is displayed which further commands and functions are still to be carried out in the remaining cycle.

8. The method according to one of the preceding claims, **characterized in that** from two points marked on the screen (10) in the sequence, the time lying therebetween with regard to the sequence is determined.

9. The method according to one of the preceding claims, **characterized in that** a cycle sequence preceding the current cycle is indicated.

10. The method according to one of the preceding claims, **characterized in that** a reference cycle sequence is indicated.

11. The method according to one of the preceding claims, **characterized in that** the time axis of the representation is scaled.

12. The method according to one of the preceding claims, **characterized in that** a sequence or sequential arrangements of a sequence if applicable with actual and/or reference values are exported, imported or stored.

13. The method according to one of the preceding claims, **characterized in that** the continuous display (26) is stopped.

## Revendications

1. Procédé de représentation sur un écran (10), de la séquence programmable des opérations pour une ou plusieurs machines dont la séquence des opérations se répète de manière cyclique, dans lequel
- une séquence est programmée ou modifiée en utilisant des fonctions de commande (54, 56, 58, 60, 62),
- des paramètres de production nécessaires sont prédéfinis,
- si nécessaire, des valeurs réelles pour les composantes de la machine sont intégrées et
- la séquence des étapes de procédé individuelles et leurs contraintes sont affichées sur l'écran (10),
sachant qu'à partir d'une séquence ou d'une séquence partielle entièrement programmée en tenant compte des paramètres de production prédéfinis et des valeurs réelles pour les composantes de la machine, une corrélation temporelle des étapes de procédé individuelles est produite et affichée à l'écran (10),
et sachant que les commandes (54, 56, 58, 60, 62) sont mises à l'échelle temporellement et affichées dans la longueur temporelle correcte,
**caractérisé en ce qu'**une ligne de progression (26) est affichée qui indique la position à laquelle se trouve actuellement la machine lors du traitement du programme de séquence.

2. Procédé selon la revendication 1, **caractérisé en ce que** les commandes (54, 56, 58, 60, 62) sont affichées par une représentation de la commande ainsi qu'une prolongation jusqu'à l'obtention de la fin temporelle correcte.

3. Procédé selon la revendication 1 ou 2, **caractérisé en ce qu'**une marge de temps (28) n'entrant pas dans la durée du cycle est affichée de manière séparée.

4. Procédé selon l'une des revendications précédentes, **caractérisé en ce qu'**une suite de commandes déterminant une durée de cycle est affichée en tant que chemin critique (20).

5. Procédé selon l'une des revendications précédentes, **caractérisé en ce que** le temps écoulé (30) entre un début de cycle et la position actuelle est affiché dans le programme de séquence.

6. Procédé selon l'une des revendications précédentes, **caractérisé en ce qu'**une vue est affichée à l'écran dans un mode de défilement, dans laquelle la position de séquence (26) actuelle est affichée localement à l'écran et la séquence programmée se déroule à l'écran (10), placée en forme de bande selon le traitement du programme de séquence.

7. Procédé selon l'une des revendications précédentes, **caractérisé en ce qu'**une vue est affichée à l'écran dans un mode de progression, dans laquelle sont montrées quelles autres commandes et fonctions restent encore à exécuter dans le cycle restant.

8. Procédé selon l'une des revendications précédentes, **caractérisé en ce que** la durée entre deux points marqués à l'écran (10) dans la séquence, est calculée à partir de ceux-ci en ce qui concerne la séquence.

9. Procédé selon l'une des revendications précédentes, **caractérisé en ce qu'**une séquence de cycle précédente au cycle actuel est affichée.

10. Procédé selon l'une des revendications précédentes, **caractérisé en ce qu'**une séquence de cycle de référence est affichée.

11. Procédé selon l'une des revendications précédentes, **caractérisé en ce que** l'axe temporel de l'affichage est mis à l'échelle.

12. Procédé selon l'une des revendications précédentes, **caractérisé en ce qu'**une séquence ou des séquence(s) d'une séquence sont exportées, importées ou enregistrées le cas échéant avec des valeurs réelles et/ou de référence.

13. Procédé selon l'une des revendications précédentes, **caractérisé en ce que** l'affichage continu (26) est maintenu.
